Europäisches Patentamt
European Patent Office
Office européen des brevets

Publication number: **0 285 342 A2**

# EUROPEAN PATENT APPLICATION

Application number: 88302685.8

Date of filing: 25.03.88

Int. Cl.⁴: C07F 7/08, C07D 493/08, C07F 7/22, A01N 43/32, A01N 55/02, A01N 55/04

Priority: 26.03.87 GB 8707323
30.04.87 GB 8710270

Date of publication of application: 05.10.88 Bulletin 88/40

Designated Contracting States: AT BE CH DE ES FR GB GR IT LI LU NL SE

Applicant: THE WELLCOME FOUNDATION LIMITED
183-193 Euston Road
London NW1 2BP(GB)

Inventor: Larkin, John Patrick
The Wellcome Foundation Ltd. Ravens Lane
Berkhamsted Hertfordshire(GB)
Inventor: Smith, Ian Harold
The Wellcome Foundation Ltd. Ravens Lane
Berkhamsted Hertfordshire(GB)
Inventor: Weston, John Bernard
The Wellcome Foundation Ltd. Ravens Lane
Berkhamsted Hertfordshire(GB)
Inventor: Baker, Stuart John
The Wellcome Foundation Ltd. Ravens Lane
Berkhamsted Hertfordshire(GB)

Representative: Goldin, Douglas Michael et al
J.A. KEMP & CO. 14, South Square Gray's Inn
London WC1R 5EU(GB)

## Improvements relating to pesticides.

Bicyclo-octane pesticides have the formula

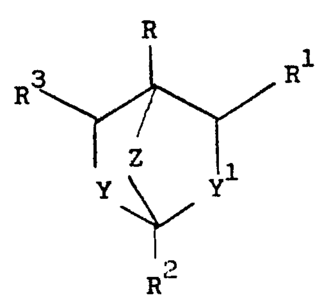

where Z is $CH_2CH_2$, $CH_2O$, $CH_2S$, $-COCH_2$ or $CH(OR^8)CH_2$ where $R^8$ is H, alkyl, acyl or carbamoyl; Y and $Y^1$ are O or $S(O)_m$ where m is 0, 1 or 2; R is a specified substituted or unsubstituted aliphatic or cycloaliphatic hydrocarbon groups or a phenyl group, $R^1$ and $R^3$ are H, or specified substituted or unsubstituted aliphatic hydrocarbon groups or $R^1$ is a carboalkoxy, cyano or gem dimethyl group when $R^3$ is H or R and $R^1$,

EP 0 285 342 A2

together with the carbon atoms to which they are attached form a carbocyclic ring; and $R^2$ is a phenyl group substituted at position 4 by $-(C{\equiv}C)_nR^5$ and optionally at other positions by specified substituents where n is 1 or 2 and $R^5$ is I, H, alkyl optionally substituted, carboalkoxy, or a trisubstituted tin or trisubstituted silicon group. Various methods of synthesis are given.

## IMPROVEMENTS RELATING TO PESTICIDES

The present invention relates to novel chemical compounds having pesticidal activity, to methods for their preparation, to compositions containing them and to their use in the control of pests. More particularly the invention relates to a class of substituted phenyl bicycloalkanes.

The use of certain 2,6,7-trioxabicyclo[2.2.2]octanes is disclosed in European Patent Application No. 152229. It has now been discovered that derivatives of these compounds have interesting pesticidal and/or antifungal activity.

Accordingly the present invention provides a compound of the formula (I)

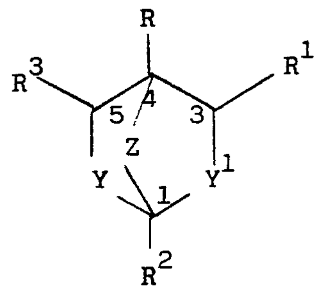

(I)

wherein R is $C_{2-10}$ alkyl, alkenyl or alkynyl, each optionally substituted by, or methyl substituted by, cyano, halo, $C_{3-4}$ cycloalkyl, $C_{1-4}$ alkoxy, or a group $S(O)_mR^4$ where $R^4$ is $C_{1-4}$ alkyl and m is 0, 1 or 2, or R is $C_{3-10}$ cycloalkyl, $C_{4-10}$ cycloalkenyl or phenyl, each optionally substituted by $C_{1-4}$ alkoxy, $C_{1-3}$ alkyl, $C_{2-4}$ alkynyl, halo, cyano or a group $S(O)_mR^4$ as defined hereinbefore;
$R^1$ and $R^3$, may be the same or different, and each is hydrogen, $C_{1-3}$ alkyl, $C_{2-3}$ alkenyl or ethynyl optionally substituted by tri-$C_{1-4}$ alkylsilyl, the alkyl or alkenyl each being optionally substituted by halo or $C_{1-4}$ alkoxy; alkyl carbalkoxy containing up to 6 carbon atoms, a group $S(O)_mR^4$ as defined hereinbefore; or $R^1$ is COO-$C_{1-4}$-alkyl, cyano or gem dimethyl when $R^3$ is hydrogen, or $R^1$ and R and the carbon atoms to which they are attached form a $C_{5-7}$ carbocyclic ring optionally substituted by halo, $C_{1-3}$ alkyl or alkoxy or $C_{2-3}$ alkenyl;
$R^2$ is a phenyl group substituted at the 4-position by a group $-(C{\equiv}C)_nR^5$ and optionally substituted at other positions of the phenyl ring, wherein n is 1 or 2 and $R^5$ is iodo, hydrogen, or a $C_{1-5}$ alkyl group optionally substituted by halo, hydroxy, $C_{1-4}$ alkoxy or $C_{2-4}$ acyloxy or $R^5$ is $C_{2-4}$ carbalkoxy, a group $Sn(R^6)_3$ wherein the groups $R^6$ are the same or different and each is a $C_{1-6}$ alkyl group or $R^5$ is a group $Si(R^7)_3$ wherein the groups $R^7$ are the same or different and each is a hydrocarbyl group containing up to 8 carbon atoms optionally substituted by one to three halo, $C_{1-6}$ alkoxy, $C_{1-6}$ alkylthio, cyano, acyloxy or carbalkoxy groups or, when one or more of the groups $R^7$ is alkynyl this is optionally substituted by silyl substituted by three $C_{1-4}$ alkyl groups; Y and $Y^1$ are the same or different and are each selected from oxygen and $S(O)_{m'}$ where m′ is 0, 1 or 2; Z is $CH_2CH_2$, $CH_2O$, $CH_2S$, or Z is $-CO.CH_2-$or $-CH(OR^8)CH_2-$wherein $R^8$ is hydrogen, $C_{1-4}$ alkyl, $C_{1-4}$ acyl or $C_{1-3}$ carbamoyl; provided that when $R^5$ is hydrogen, or a $C_{1-5}$ alkyl group optionally substituted by halo, hydroxy, $C_{1-4}$ alkoxy or $C_{2-4}$ acyloxy or $R^5$ is $C_{2-4}$ carbalkoxy or a silyl group substituted by three $C_{1-4}$ alkyl groups or two $C_{1-4}$ alkyl groups and a phenyl group, n is 2.

In the definition of Z, the first mentioned atom is adjacent to the 4-position of the bicyclic ring system.

By the term hydrocarbyl group is meant alkyl, alkenyl (including cyclic alkyl and alkenyl, and alkyl and alkenyl substituted by cyclic alkyl and alkenyl), alkynyl, aryl and aralkyl groups.

One group of preferred compounds of the present invention is compounds of the formula (I) in which $R^2$ is a phenyl group substituted at the 4-position by a group $-(C{\equiv}C)_nR^5$ and optionally substituted at other positions of the phenyl ring, wherein n is 1 or 2 and $R^5$ is a group $Sn(R^6)_3$ wherein the groups $R^6$ are the same or different and are each $C_{1-6}$ alkyl groups; or n is 2 and $R^5$ is hydrogen, or a $C_{1-5}$ alkyl group optionally substituted by halo, hydroxy, $C_{1-4}$ alkoxy or $C_{2-4}$ acyloxy or $R^5$ is $C_{2-4}$ carbalkoxy or a silyl group substituted by three $C_{1-4}$ alkyl groups or two $C_{1-4}$ alkyl groups and a phenyl group.

A further group of preferred compounds of the present inventions is compounds of the formula (I) in which $R^2$ is a phenyl group substituted at the 4-position by a group $-(C{\equiv}C)_nR^5$ and optionally substituted at other positions of the phenyl ring, wherein n is 1 or 2 and $R^5$ is iodo, or a group $Si(R^7)_3$ wherein the groups $R^7$ are the same or different and each is a hydrocarbyl group containing up to 8 carbon atoms optionally substituted by one to three halo, $C_{1-6}$ alkoxy, $C_{1-6}$ alkylthio, cyano, acyloxy or carbalkoxy groups or, when

one or more of the groups $R^7$ is alkynyl this is optionally substituted by. silyl substituted by three $C_{1-4}$ alkyl groups, provided that $R^5$ is not a silyl group substituted by three $C_{1-4}$ alkyl groups or two $C_{1-4}$ alkyl groups and a phenyl group when n is 1.

Suitably R is propyl, butyl, pentyl, $C_{2-5}$ alkenyl or alkynyl, $C_{3-7}$ cycloalkyl or phenyl each optionally substituted by fluoro, chloro or bromo. Most suitably R is n-propyl, n-butyl, i-butyl, sec-butyl, t-butyl, cyclopentyl, cyclohexyl or phenyl and preferably R is n-propyl, n-butyl, i-butyl, t-butyl or cyclohexyl.

Suitably $R^1$ is hydrogen, cyano, methyl or ethyl each optionally substituted by cyano, methoxy, methylthio, chloro, bromo or fluoro. Most suitably $R^1$ is hydrogen, methyl, cyano, trifluoromethyl or ethyl. Preferably $R^1$ is hydrogen, methyl, cyano or trifluoromethyl.

Suitable substituents on the phenyl group in $R^2$ include halo, cyano, nitro, $C_{1-3}$ alkyl or alkoxy each optionally substituted by halo. Preferably the halo substituent will be fluoro, chloro, bromo or iodo. Suitably there are up to two substituents which are preferably at the 3-and/or 5-positions, but fluoro or chloro may also be at the 2-and/or 6-positions.

Suitably $R^3$ is hydrogen.

When n is 2, suitably $R^5$ is hydrogen, methyl or ethyl optionally substituted by hydroxy, methoxy or ethoxy or $R^5$ is a tri $C_{1-4}$ alkylsilyl group. Most suitably $R^5$ is hydrogen, trimethylsilyl or substituted methyl or substituted ethyl, the substituents being hydroxy or methoxy.

When n is 1 or 2, suitably the hydrocarbyl groups $R^7$ are selected from methyl, ethyl, propyl, butyl, cyclohexyl, cyclohexenyl, vinyl, allyl, phenyl, benzyl or a group $(CH_2)_pR^9$ wherein p is 1 to 3 and $R^9$ is halo, cyano, acetoxy, $C_{1-5}$ alkoxy, phenoxy, trimethylsilyloxy or a group $S(O)m''$ $R^{10}$ wherein m″ is 0, 1 or 2 and $R^{10}$ is $C_{1-4}$ alkyl or phenyl.

Suitably two of the groups $R^7$ are methyl.

In addition, when n is 1 or 2, $R^5$ is suitably iodo or tributyltin.

Suitably Z is $-CH_2S-$or $-CH_2O-$.

Suitably Y and $Y^1$ are both oxygen.

The compounds of the formula (I) may exist in a number of stereoisomeric forms. The present invention encompasses both individual conformational and stereoisomers and mixtures thereof. The present invention also encompasses radioisotopes of compounds of the formula (I), particularly those in which one carbon atom is $C^{14}$ or one to three hydrogen atoms are replaced by tritium.

Preferred compounds of the present invention include:

1-[4-(2-iodoethynyl)phenyl]-4-n-propyl-2-6-7-trioxabicyclo[2.2.2]octane,
1-[4-[dimethyl(prop-2-enyl)silylethynyl]phenyl]-4-n-propyl-2,6,7-trioxabicyclo[2.2.2]octane, and
1-[4-(2-benzyldimethylsilylethynyl)phenyl]-4-n-propyl-2-6,7-trioxabicyclo[2.2.2]octane
1-[4-(buta-1,3-diynyl)phenyl]-4-n-propyl-2,6,7-trioxabicyclo[2.2.2]octane 4-n-propyl-1-[4-(4-trimethylsilylbuta-1,3-diynyl)phenyl]-2,6,7-trioxabicyclo[2.2.2]octane
1-[4-(5-methoxypenta-1,3-diynyl)phenyl]-4-n-propyl-2,6,7,trioxabicyclo[2.2.2]octane
4-n-propyl-1-[4-(2-tri-n-butylstannylethynyl)phenyl]-2,6,7-trioxabicyclo[2.2.2]octane
1-[4-(2-benzyldimethylsilylethynyl)phenyl]-4-n-propyl-2,6,7-trioxabicyclo[2.2.2]octane.
1-[4-(2-acetoxyethyldimethylsilylethynyl)phenyl]-4-propyl-2,6,7-trioxabicyclo[2.2.2]octane.
1-(4-{2-[dimethyl(3-methylbutyl)silyl]ethynyl}phenyl)-4-propyl-2,6,7,trioxabicyclo[2.2.2]octane.
1-{4-[2-(chloromethyldimethylsilyl)ethynyl]phenyl}-4-propyl-2,6,7-trioxabicyclo[2.2.2]octane.
4-(dimethyl-{2-[4-(4-propyl-2,6,7-trioxabicyclo[2.2.2]oct-1-yl)phenyl]ethynyl}silyl)butyronitrile.

In a further aspect, the present invention provides a process for the preparation of a compound of the formula (I). The process for the preparation of a compound of the formula (I) may be any method known in the art for preparing analogous compounds, for example :

(i) when it is required to prepare a compound wherein $R^5$ is iodo by the iodination a compound of the formula (IA)

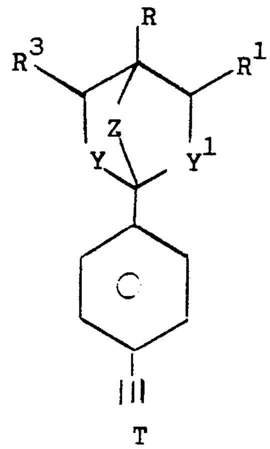

(1A)

wherein T is hydrogen or C≡CH. The reaction is normally carried out in the presence of a strong base, such as an alkyllithium conveniently butyllithium in an inert solvent, such as an ether, for example diethyl ether, at a non-extreme temperature, for example between -70° and 50°C and conveniently at -70°C followed by the addition of iodine.

(ii) when it is desired to prepare a compound of the formula (I) wherein $R^5$ is a group $Sn(R^6)_3$ or $Si(R^7)_3$ by the reaction of the corresponding compound of the formula (IA) wherein T is hydrogen or ethynyl with a compound $halSn(R^6)_3$ or $halSi(R^7)_3$ as appropriate wherein hal is halogen. The reaction is normally carried out in the presence of a strong base, such as an alkyllithium conveniently butyllithium in an inert solvent, such as an ether, for example tetrahydrofuran, at a non-extreme temperature, for example between -50° and 50°C and conveniently between -10° and 30°C. The starting material, i.e. the unsubstituted alkynylphenyl bicycloalkane may be prepared as described later.

(iii)when it is required to prepare a compound wherein n is 2 by the reaction of a compound of the formula (IA) with a compound of the formula $T^1C{\equiv}CR^{11}$ wherein R, $R^1$, $R^3$, Z, Y and $Y^1$ are as hereinbefore defined, $R^{11}$ is a group $R^5$ as hereinbefore defined that is inert under the reaction conditions employed and one of T and $T^1$ is hydrogen and the other is halo.
This reaction is conveniently carried out in the presence of catalysts such as (a) a palladium catalyst and in particular bis-triphenyl phosphine palladium (II) chloride together with a cuprous halide, preferably cuprous iodide when the reaction is conveniently carried out in an alkylamine solvent such as diethylamine or triethylamine at a non-extreme temperature, i.e. between 0° and 100° and conveniently at 20-30°, (b) cuprous chloride in the presence of hydroxylamine when the reaction is suitably carried out in a solvent system comprising an alcohol, such as methanol and an alkylamine such as ethylamine at a non-extreme temperature i.e. between -20° and 80° and conveniently between 0 and 5°. This is not a preferred route when T is halo and $T^1$ is hydrogen.
Suitably T is bromo or iodo and preferably bromo. When $R^{11}$ is a hydroxyalkyl group this can be protected if desired. Suitable protecting groups for the hydroxyalkyl group are those which remain in place during the reaction and which can be removed after the addition of the alkynyl group, for example silyl substituted by three $C_{1-4}$ alkyl groups or two $C_{1-4}$ alkyl groups and a phenyl group.

(iv) It is often convenient to prepare compounds of the formula (I) by interconversion from other compounds of the formula (I), for example :
when it is desired to prepare a compound of the formula (I) wherein n is 2 and $R^5$ is hydrogen by the desilylation of a compound of the formula (I) wherein $R^5$ is a tri-$C_{1-4}$ alkylsilyl group. This reaction may be carried out by methods well known to those skilled in the art, for example by reaction with tetrabutylammonium fluoride in an ether, such as tetrahydrofuran, at a non-extreme temperature, for example between 0° and 70°C and conveniently at room temperature.

The compounds of the formula (IA) wherein T is hydrogen may be prepared :

(a) by desilylation of the corresponding compounds where T is $Si(C_{1-4}\ alkyl)_3$. This reaction may be carried out by methods well known to those skilled in the art, for example by reaction with tetrabutylammonium fluoride in an ether, such as tetrahydrofuran, at a non-extreme temperature, for example between 0° and 70° and conveniently at room temperature.

(i) The compounds of the formula (IA) wherein T is $Si(C_{1-4}\ alkyl)_3$ may be prepared by the reaction of the corresponding compound of the formula (IB)

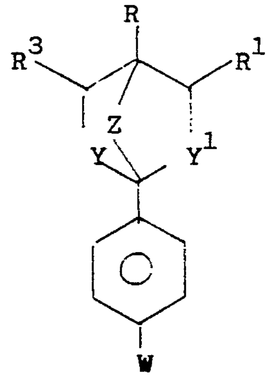

(IB)

where W is halo, for example bromo or iodo, with a compound HC≡CX wherein X is silyl substituted by three $C_{1-4}$ alkyl groups. This reaction is carried out in the presence of a suitable palladium catalyst well known to those skilled in the art for this type of reaction, for example bis-triphenylphosphine palladium dichloride, and a catalytic amount of a cuprous halide, such as cuprous iodide. The reaction will normally be carried out in the presence of basic solvent such as diethylamine or triethylamine at a non-extreme temperature, for example between -50° and 100°C and conveniently at room temperature.

The halophenylbicycloalkane starting materials, wherein Y and Y' are oxygen and Z is $CH_2O$ may be prepared by the cyclisation of a compound of the formula (II) ;

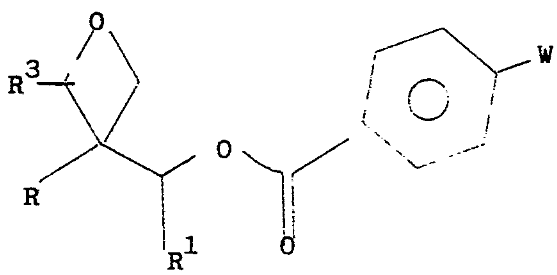

(II)

wherein R, $R^1$, $R^3$ and W are as hereinbefore defined, in the presence of an acid catalyst. Boron trifluoride etherate is a particularly preferred acid catalyst for this cyclisation which will normally be carried out in an inert solvent, such as a halogenated hydrocarbon, conveniently dichloromethane, at below ambient temperature, for example between -100° and 0°C and conveniently between -70° and -50°C

The compounds of the formula (II) may be prepared by the reaction of compounds of the formula (III) and (IV):

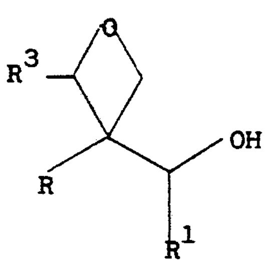

(III)

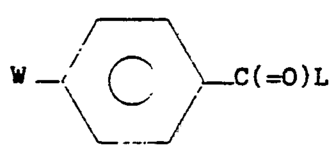

(IV)

where R, $R^1$, $R^3$ and W are as hereinbefore defined and L is leaving group such as halo. This reaction conveniently takes place in an inert solvent in the presence of base at a non-extreme temperature. Halogenated hydrocarbons, such as dichloromethane, or ethers, such as diethyl ether, are particularly suitable solvents, pyridine is a preferred base and the reaction will conveniently be carried out at between -50° and 100°C, preferably at 0°C.

The compounds of the formula (III) may in turn be prepared from compounds of the formula (V) :

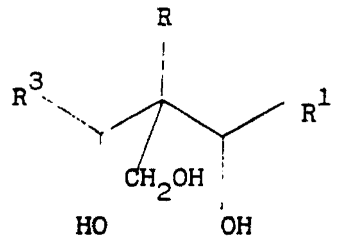

(V)

wherein R, $R^1$ and $R^3$ are as defined above, by reaction with diethyl carbonate in the presence of a strong base, for example potassium hydroxide, in a polar solvent, such as an alcohol, for example ethanol, at an elevated temperature, for example between 50° and 100°C. This is a preferred method of making compounds of the formula (III) wherein $R^1 = CF_3$ or hydrogen.

The compounds of the formula (III) may alternatively be prepared by the reaction of a Grignard reagent $R^1MgHal$ with a compound of the formula (VI)

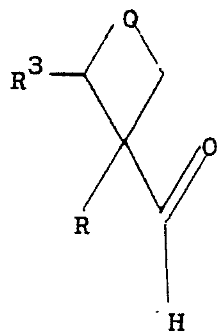

(VI)

wherein R, $R^1$ and $R^3$ are as hereinbefore defined and Hal is a halogen atom such as bromine or iodine. This reaction is conveniently carried out in an inert solvent, suitably an ether for example diethyl ether, at a non-extreme temperature, for example between -50° and 50°C and preferably between -10° and 10°C. The compounds of the formula (VI) may be prepared by oxidation of compounds of the formula (III) wherein $R^1$ is hydrogen by using oxalyl chloride and dimethyl sulphoxide in an inert solvent, such as a halogenated hydrocarbon, for example dichloromethane, followed by a base such as triethylamine or by using pyridinium chlorochromate in an inert solvent, such as a halogenated hydrocarbon, for example dichloromethane.

The triol of the formula (V) may be prepared :

(ia) In certain cases, it may be convenient to prepare triol derivatives where $R^1$, $R^3$ are hydrogen and one of the hydroxy groups is protected, by reduction of an ester of the formula (VII):

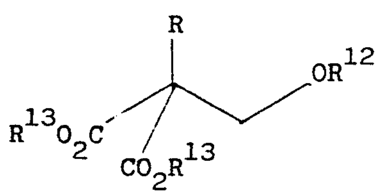

(VII)

wherein $R^{12}$ is a hydroxy protecting group such as benzyl and $R^{13}$ is $C_{1-4}$ alkyl. This reduction is suitably carried out by a complex hydride such as lithium aluminium hydride in an inert solvent conveniently an ether. The compound of the formula (VII) may be prepared from the corresponding compound $RCH(CO_2R^{13})_2$ by reaction with a compound $X^1CH_2OR^{12}$, wherein $X^1$ is a leaving group such as a halogen, in the presence of a strong base, such as sodium hydride.

(ib) when it is required to prepare a compound of the formula (V) wherein $R^3$ is hydrogen, by the reduction of a compound of the formula (VIII):

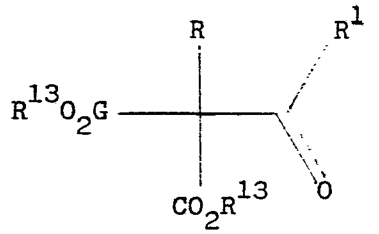

(VIII)

wherein R, $R^1$ and $R^{13}$ are as hereinbefore defined. This reduction is suitably carried out by means of a complex hydride, such as lithium aluminium hydride in an inert solvent such as an ether, for example diethyl ether.

(ic) When it is required to prepare a compound of the formula (V) wherein $R^1$ and $R^3$ are hydrogen the condensation of a compound $RCH_2CHO$ with formaldehyde in the presence of aqueous base, for example calcium hydroxide at a non-extreme temperature, for example 0°-100°C and conveniently between 30° and 70°C.

When R and $R^1$ are linked to form a carbocyclic ring, the compound of the formula (VIII) is conveniently prepared by the reaction of a compound of the formula (IX)

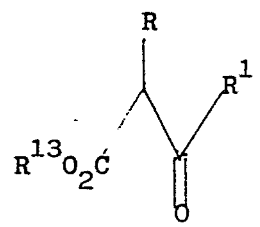

(IX)

with a compound Hal-$CO_2R^{13}$, wherein R, $R^1$ and $R^{13}$ are as hereinbefore defined and Hal is halogen, for example chlorine. This reaction is conveniently carried out in the presence of a Grignard reagent for example ethyl magnesium bromide, in an inert solvent such as an ether, for example tetrahydrofuran. Other compounds of the formula (VIII) are conveniently prepared by the reaction of a compound $RCH(CO_2R^{13})_2$ with a compound Hal $CO.R^1$ wherein R, $R^1$, $R^{13}$ and Hal are as hereinbefore defined or trifluoroacetic anhydride. This reaction is conveniently carried out in the presence of a strong base, such as a metal hydride in a non-polar solvent, for example an aromatic hydrocarbon such as benzene or toluene.

The compounds of formula (IB) where W is iodo may also be prepared from the corresponding compounds where W is bromo. This reaction proceeds by the reaction of the bromo compound with an alkyllithium compound, for example n-butyllithium, in an inert solvent, such as an ether, conveniently diethyl ether, at a non-extreme temperature, for example between -80° and 20°C and conveniently between -70° and 0°, to give the corresponding lithium intermediate which is then reacted with iodine in an inert solvent such as an ether, conveniently diethyl ether. The reaction sequence is conveniently carried out i situ, the organo lithium intermediate not being isolated.

The bromo-compound may be prepared by the cyclisation of a compound of the formula (II) as described earlier by the reaction of a compound analogous to that of the formula (V) and wherein R, $R^1$ and $R^3$ are as defined in relation to formula (I) with an ortho-carboxylate of the formula $W^1$ $C(OR^{14})_3$ wherein $W^1$ is a bromosubstituted phenyl group and $R^{14}$ is $C_{1-4}$ alkyl, phenyl or $C_{7-9}$ aralkyl. Suitably $R^{14}$ is methyl or ethyl, preferably methyl. The reaction is normally carried out in the presence of an acid such as a mineral acid, conveniently hydrochloric acid or a sulphonic acid derivative, such as toluene sulphonic acid, or an acid resin, or in the presence of a trialkylamine, such as triethylamine, at an elevated temperature, for example between 50° and 200°C, conveniently between 120° and 170°C. The reaction may conveniently be carried out in the absence of a solvent but a suitable solvent may be added if desired. The preparation of such bromophenylsubstituted bicyclooctanes is described in published European Patent Appln. No. 152229 and in our copending European Appln. No. 86305820.2 and in our copending European Appln.86307276.5.

(b) The compounds of the formula (IA) wherein T is hydrogen may also be prepared by dehydrobromination of the corresponding 1,2-dibromoethyl compound, i.e. a compound wherein $R^2$ is replaced by a (1,2-dibromoethyl)phenyl group. This reaction is conveniently carried out in the presence of sodamide

in liquid ammonia. The reaction may be carried out in an inert solvent, such as an ether, for example tetrahydrofuran at a non-extreme temperature, for example between -20° and 50°C and conveniently at room temperature.

Compounds of Formula (I) may be used to control arthropods such as insect and acarine pests and to control fungal infections. Thus, the present invention provides a method for the control of arthropods which comprises administering to the arthropod or to its environment on arthropodically effective amount of a compound of the formula (I). Compounds of formula (I) may be used to control economically important arthropods on agricultural crops, stored agricultural produce or arthropods important in public health. The present invention also provides a method for the control and/or eradication of arthropod infestations on animals (including humans) which comprises administering to the animal an effective amount of a compound of the formula (I). The present invention further provides for the compounds of the formula (I) for use in human and veterinary medicine for the control of arthropod pests. The present invention further provides for the compounds of the formula (I) for the control of fungal pests, such as fungi harmful to timber or crops.

The compounds of Formula (I) may be used for such purposes by application of the compounds themselves or in diluted form in known fashion as a dip, spray, lacquer, foam, dust, powder, aqueous suspension, paste, gel, shampoo, grease, combustible solid, vapourising mat, combustible coil, bait, wettable powder, granule, aerosol, emulsifiable concentrate, oil suspensions, oil solutions, pressure-pack, impregnated article or pour on formulation. Concentrates are not applied per se, but diluted (usually with water) prior to treatment. Sprays may be applied by hand or by means of suitable spray equipment (aerial application, tractor mounted spray, spray race or arch, etc.). The animal, plant or surface being treated may be saturated with the spray by means of high volume application or superficially coated with the spray by means of light or ultra low volume application. Aqueous or oil suspensions may be applied in the same manner as sprays or dips. Dusts may be distributed by means of a powder applicator or, in the case of animals, incorporated in perforated bags attached to trees or rubbing bars. Pastes, shampoos and greases may be applied manually or distributed over the surface of an inert material against which animals rub and transfer the material to their skins. Pour-on formulations are dispensed as a unit of liquid of small volume on to the backs of animals such that all or most of the liquid is retained on the animals. Vapourising mats and combustible coils are burnt to release compounds of formula (I) into the air and so control against flying insects. Granules are applied for use in soil or as baits.

The compounds of formula (I) may be formulated either as formulations ready for use on the animals, plants or surface or as formulations requiring dilution prior to application, but both types of formulation comprise a compound of formula (I) in intimate admixture with one or more carriers or diluents. The carriers may be liquid, solid or gaseous or comprise mixtures of such substances, and the compound of formula (I) may be present in a concentration of from 0.025 to 99% w/v depending upon whether the formulation requires further dilution.

Dusts, powder and granules comprise the compound of formula (I) in intimate admixture with a powdered solid inert carrier for example suitable clays, kaolin, talc, mica, chalk, gypsum, vegetable carriers, starch and diatomaceous earths.

Sprays of a compound of formula (I) may comprise a solution in an organic solvent (e.g. those listed below) or an emulsion in water prepared in the field from an emulsifiable or suspension concentrate or wettable powder prior to treatment. The concentrate preferably comprises a mixture of the active ingredient, with or without an organic solvent and one or more emulsifiers. Solvents may be present within wide limits but preferably in an amount of from 0 to 99% w/v of the composition and may be selected from kerosene, ketones, alcohols, xylene, aromatic naphtha, and other solvents known in the formulating art. The concentration of emulsifiers may be varied within wide limits but is preferably in the range of 5 to 25% w/v and the emulsifiers are conveniently non-ionic surface active agents including polyoxyalkylene esters of alkyl phenols and polyoxyethylene derivatives of hexitol anhydrides and anionic surface active agents including Na lauryl sulphate, fatty alcohol ether sulphates, Na and Ca salts of alkyl aryl sulphonates and alkyl sulphosuccinates.

Wettable powders comprise an inert solid carrier, one or more surface active agents, and optionally stabilisers and/or anti-oxidants.

Emulsifiable concentrates comprise emulsifying agents, and often an organic solvent, such as kerosene, ketones, alcohols, xylenes, aromatic naphtha, and other solvents known in the art.

Suspension concentrates comprise the active ingredient as a solid together with surface active agents, and optionally stabilisers and anti-oxidants.

Wettable powders and emulsifiable concentrates will normally contain from 5 to 95% by weight of the active ingredient, and are diluted, for example with water, before use.

Lacquers comprise a solution of the active ingredient in an organic solvent, together with a resin, and optionally a plasticiser.

Dip washes may be prepared not only from emulsifiable concentrates but also from wettable powders, soap based dips and aqueous suspensions comprising a compound of formula (I) in intimate admixture with a dispersing agent and one or more surface active agents.

Aqueous suspensions of a compound of formula (I) may comprise a suspension in water together with suspending, stabilizing or other agents. The suspensions or solutions may be applied per se or in a diluted form in known fashion.

Aerosol sprays may be prepared as a simple solution of the active ingredient in the aerosol propellant and co-solvent such as halogenated alkanes and the solvents referred to above, respectively.

Greases (or ointments) may be prepared from vegetable oils, synthetic esters of fatty acids or wool fat together with an inert base such as soft paraffin. A compound of formula (I) is preferably distributed uniformly through the mixture in solution or suspension. Greases may also be made from emulsifiable concentrates by diluting them with an ointment base.

Pastes and shampoos are also semi-solid preparations in which a compound of formula (I) may be present as an uniform dispersion in a suitable base such as soft or liquid paraffin or made on a non-greasy basis with glycerin, mucilage or a suitable soap. As greases, shampoos and pastes are usually applied without further dilution they should contain the appropriate percentage of the compound of Formula (I) required for treatment.

Pour-on formulations may be made as a solution or suspension of a compound of formula (I) in a liquid medium. An avian or mammal host may also be protected against infestation of acarine ectoparasites by means of carrying a suitably-moulded, shaped plastics article impregnated with a compound of formula (I). Such articles include impregnated collars, tags, bands, sheets and strips suitably attached to appropriate parts of the body. Suitably the plastics material is a polyvinyl chloride (PVC).

The concentration of the compound of formula (I) to be applied to an animal will vary according to the compound chosen, the interval between treatments, the nature of the formulation and the likely infestation, but in general 0.001 to 20.0% w/v and preferably 0.01 to 10% of the compound should be present in the applied formulation. The amount of the compound deposited on an animal will vary according to the method of application, size of the animal, concentration of the compound in the applied formulation, factor by which the formulation is diluted and the nature of the formulation but in general will lie in the range of from 0.0001% to 0.5% except for undiluted formulations such as pour-on formulations which in general will be deposited at a concentration in the range from 0.1 to 20.0% and preferably 0.1 to 10%.

The compounds of formula (I) are of use in the protection and treatment of plant species, stored agricultural produce or insects of public health importance, in which case an effective insecticidal or acaricidal amount of the active ingredient is applied. The application rate will vary according to the compound chosen, the nature of the formulation, the mode of application, the plant species, the planting density and likely infestation and other like factors but in general, a suitable use rate for agricultural crops is in the range 0.001 to 3kg/Ha and preferably between 0.01 and 1kg/Ha. Typical formulations for agricultural use contain between 0.0001% and 50% of a compound of formula (I) and conveniently between 0.1 and 15% by weight of a compound of the formula (I).

Particular crops include cotton, wheat, maize, rice, sorghum, soya, vines, tomatoes, potatoes, fruit trees and spruce.

Dusts, greases, pastes and aerosol formulations are usually applied in a random fashion as described above and concentrations of 0.001 to 20% w/v of a compound of Formula (I) in the applied formulation may be used.

Compounds of formula (I) have been found to have activity against the common housefly (Musca domestica) and against the wood destroying fungi:brown rot (Coniphora puteana), white rot (Coriolus - (Trametes) versicolor), staining (Aureobacidium pullulans) and soft rot (Chaetonium globosum). In addition, certain compounds of formula (I) have activity against other arthropod pests including Tetranychus urticae, Plutella xylostella, Culex spp. and Blattella germanica. The compounds of formula (I) are thus useful in the control of arthropods e.g. insects and acarines in any environment where these constitute pests, e.g. in agriculture, in animal husbandry, in public health control and in domestic situations.

Insect pests include members of the orders Coleoptera e.g. Anobium, Tribolium, Sitophilus, Diabrotica, Anthonomus or Anthrenus spp.)., Lepidoptera (e.g. Ephestia, Plutella, Chilo, Heliothis,Spodoptera or Tineola spp.), Diptera (e.g. Musca, Aedes, Culex, Glossina, Stomoxys, Haematobia, Tabanus, Hydrotaea, Lucilia, Chrysomia, Callitroga, Dermatobia, Hypoderma, Liriomyza and Melophagus spp.). Phthiraptera (Malophaga e.g. Damalina spp. and Anoplura e.g. Linognathus and Haematopinus spp.), Hemiptera (e.g. Aphis, Bemisia, Aleurodes, Nilopavata, Nephrotetix or Cimex spp.), Orthoptera (e.g. Schistocerca or Acheta spp.), Dictyoptera (e.g. Blattella, Periplaneta or Blatta spp.), Hymenoptera (e.g. Solenopsis or Monomorium spp.). Isoptera e.g. Reticulitermes spp.), Siphonaptera (e.g. Ctenocephalides or Pulex spp.), Thysanura (e.g. Lepisma spp.), Dermaptera (e.g. Forficula spp.) and Pscoptera (e.g. Peripsocus spp.).

Acarine pests include ticks, e.g. members of the genera Boophilus, Rhipicephalus, Amblyomma, Hyalomma, Ixodes, Haemaphysalis, Dermocentor and Anocentor, and mites and manges such as Tetranychus, Panonychus, Psoroptes, Notoednes, Psorergates, Chorioptes and Demodex spp.

Fungal pests includes wood destroying and crop fungi such as Basidiomycetes eg. Merulius lacrymans, Poria placenta, Gloeophyllum spp., Coriolus (Trametes) versicolor and Stereum hirsutum; Puccinia recondita, Uromyces phasioli, Ustilago maydis, Tilletia caries, Ustilago nuda, Rhizoctonia solani; Ascomycetes, e.g. Chaetomium globosum, Venturia inaequalis, Sphaerotheca fuliginea, Podosphaera leucotricha, Erysiphe graminis, Uncinula necator, Pyrenophora spp.;Deuteromycetes, e.g. Aureobasidium pullulans, Fusarium culmorum, Septoria nodorum, Botrytis fabae, Piricularia oryzae,Botrytis cinerae, Fusarium nivale, Verticillium albo-atrum and Penicillium digitatum; Mastigomycetes, e.g. Phytophthora spp, Plasmopara viticola and Pythium ultimum.

Compounds of the invention may be combined with one or more other active ingredients (for example pyrethroids, carbamates and organophosphates) and/or with attractants and the like. Furthermore, it has been found that the activity of the compounds of the invention may be enhanced by the addition of a synergist or potentiator, for example a second compound of the invention; or a pyrethroid pesticidal compound.

Stabilisers for preventing any chemical degradation which may occur with the compounds of the invention include, for example, antioxidants (such as tocopherols, butylhydroxyanisole and butylhydroxytoluene) and scavengers (such as epichlorhydrin) and organic or inorganic bases e.g. trialkylamines such as triethylamine which can act as basic stabilises and as scavengers.

The following Examples illustrate, in a non-limiting manner, preferred aspects of the invention. All temperatures are in degrees Celsius.

Examples A - F describe the preparation of compounds 1 - 12 of the invention. Biological properties of compounds 1 - 12 of the invention are summarised in the first table below while characterising physical data for compounds 1 - 12 of the invention is given in the second table below. Formulation Examples 1 - 8 illustrate various compositions containing the invention compounds.

## BIOLOGICAL ACTIVITY

a) The activity of the compounds of the invention were tested by dissolving the compounds in acetone (5%) and then diluting in water: 'Symperonic'(94.5%: 0.5%) to give a water emulsion. The solution was then used to treat the following insects.

### Musca domestica:

20 female Musca were contained in a cardboard cylinder with gauze over either end. Solution containing the compound was sprayed onto the insects so enclosed and mortality assessed after 48 hours at 25°C.

### Sitophilus granarius:

20 adult Sitophilus were added to 10g wheat which had been previously treated with 2ml of the solution containing the compound. Mortality is assessed after 6 days at 25°C.

### Plutella xylostella:

7 Plutella larvae were sprayed with the solution containing the compound and added to a chinese cabbage leaf which had been similarly sprayed and left to dry. Mortality was assessed after 2 days at 25°C.

Myzus persicae

10 adult Myzus were placed on a leaf disc of chinese cabbage. 24 hours later the disc was sprayed with the solution containing the compound. Mortality is assessed after 2 days at 25°C.

Tetranychus urticae:

Leaf discs of infested french bean were sprayed with the solution containing the compound. Mortality was assessed after 2 days at 25°C on a scale.

0 - No mortality
1 - 1% - 25% mortality
2 - 25% - 40% mortality
3 - 40% - 70% mortality
4 - 70% - 98% mortality
5 - 98% - 100% mortality

Results

The following compounds showed activity when applied at a rate of 200 ppm and 1000 ppm
Mortality (%)

| Compound | Rate (ppm) | M.d. (% Mortality) | S.g. (% Mortality) | P.x. (% Mortality) | M.p. (% Mortality) | T.u. (Score) |
|---|---|---|---|---|---|---|
| 1 | 1000 | 100 | 100 | 14 | 0 | 1 |
| | 200 | 100 | 92 | 0 | 7 | 0 |
| 2 | 1000 | 0 | 0 | 13 | 86 | 2 |
| 3 | 1000 | 100 | 100 | 0 | 0 | 1 |
| | 200 | 100 | 92 | 25 | | 0 |
| 4 | 1000 | 100 | 100 | 25 | 45 | 2 |
| | 200 | 100 | 100 | 0 | 40 | 1 |
| 5 | 1000 | 100 | 100 | 0 | – | 3 |
| | 200 | 100 | 100 | 0 | 0 | 1 |
| 6 | 1000 | 100 | 100 | 100 | 0 | 3 |
| | 200 | 78 | 100 | 17 | 44 | 2 |
| 7 | 1000 | 100 | 100 | 75 | 88 | 3 |
| | 200 | 56 | 94 | 25 | 29 | 0 |
| 8 | 1000 | 100 | 100 | 50 | 100 | 3 |
| | 200 | 81 | 95 | 0 | 0 | 1 |
| 9 | 1000 | 100 | 54 | 29 | 0 | 2 |
| | 200 | 5 | 5 | 14 | 0 | 1 |
| 10 | 1000 | 100 | 100 | 0 | 0 | 2 |
| | 200 | 33 | 90 | 0 | 0 | 2 |
| 11 | 1000 | 100 | 95 | 0 | 0 | 0 |
| | 200 | 65 | 55 | 0 | 0 | 0 |

| | |
|---|---|
| 2 | 0 |
| 0 | 0 |
| 17 | 17 |
| 100 | 26 |
| 100 | 0 |
| 1000 | 200 |
| 12 | |

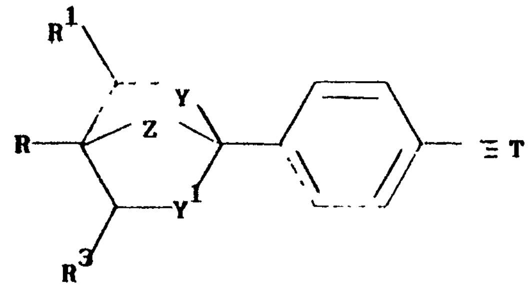

$R^1 = R^3 = H$
$Y = Y^1 = O$
$Z = CH_2O$

| Compound | R | T | M.Pt | Mass Spectrum Chemical Ionisation M+1 | Nuclear magnetic resonance spectrum ($^1H$ carried out in $CDCl_3$ and expressed as p.p.m. from TMS, number of protons, number of peaks $JH_Z$ (where appropriate) |
|---|---|---|---|---|---|
| 1 | <u>n</u>-Pr | $(CH_2:CHCH_2)SiMe_2$ | 100.6°C | 357 | 7.55,2H,d,7; 7.45,2H,d,7; 5.87,1H,m; 4.96,2H,m; 4.10,6H,s;1.70,2H,d8;1.30,4H,m; 1.00,3H,m;0.21,6H,s |
| 2 | <u>n</u>-Pr | $Ph_2SiMe$ | 123.7°C | 455 | 7.72-7.35,14H,m; 4.10,6H,s; 1.30,4H,m; 0.95,3H,m; 0.77,3H,s |
| 3 | <u>n</u>-Pr | $PhCH_2SiMe_2$ | 112.3°C | 407 | 7.57,2H,d,7; 7.46,2H,d,7; 7.24,2H,m; 7.13,3H,m; 4.10,6H,s; 2.29,2H,s; 1.28,4H,m; 0.95,3H,m; 0.23,6H,s |
| 4 | <u>n</u>-Pr | I | solid | | 7.50,4H,m; 4.10,6H,s; 1.40,4H,m; 1.00,3H,m |

| Compound | R | T | M.Pt | Mass Spectrum Chemical Ionisation M+1 | Nuclear magnetic resonance spectrum ($^1H$ carried out in $CDCl_3$ and expressed as p.p.m. from TMS, number of protons, number of peaks $JH_Z$ (where appropriate) |
|---|---|---|---|---|---|
| 5 | n-Pr | $Me_3SiC\equiv C$ | solid | 355 | 7.40,4H,m; 4.10,6H,s; 1.40,4H,m; 1.00,3H,m; 0.30,9H,s. |
| 6 | n-Pr | $HC\equiv C$ | solid | 283 | 7.50,4H,m; 4.10,6H,s; 2.50,1H,s; 1.60-0.80,7H,m. |
| 7 | n-Pr | $MeOCH_2C\equiv C$ | 139-140° | 327 | 7.50,4H,m; 4.25,2H,s; 4.10,6H,s; 3.40,3H,s; 1.25,4H,m; 0.90,3H,m. |
| 8 | n-Pr | $(n\text{-}Bu)_3Sn$ | 61° | 549 | 7.55,2H,d,7; 7.45,2H,d,7; 4.10,6H,s; 1.70-0.75,34H. |

| Compound | R | $R^6$ | M.Pt | Mass Spectrum Chemical Ionisation M + 1 | NMR |
|---|---|---|---|---|---|
| 9 | n-Pr | $AcOCH_2CH_2SiMe_2$ | oil | 403 | 7.56,2H,d,7; 7.34,2H,d,7; 4.2-4.4,2H,m; 4.11,6H,s; 2.05,3H,s; 0.9-1.6,9H,m; 0.30,6H,s. |
| 10 | n-Pr | $Me_2CH(CH_2)_2SiMe_2$ | 86.1°C | 387 | 7.56,2H,d,7; 7.44,2H,d,7; 4.10,6H,s; 1.2-1.6,7H,m; 0.94,9H,m; 0.68,2H,m; 0.22,6H,s. |
| 11 | n-Pr | $ClCH_2SiMe_2$ | 137.9°C | 365 | 7.56,2H,d,7; 7.46,2H,d,7; 4.11,6H,s; 2.95,2H,s; 1.2-1.4,4H,m; 0.92,3H,t,6; 0.35,6H,s. |
| 12 | n-Pr | $CN(CH_2)_3SiMe_2$ | 118.7°C | 384 | 7.54,2H,d,7; 7.42,2H,d,7; 4.11,6H,s; 7.45,2H,t,6; 1.75-1.95,2H,m; 1.20-1.33,4H,m; 0.8-1.00,7H,m; 0.23,6H,s. |

The activity of compounds of the invention against unanaesthetised female Musca domestica (WRL strain), was demonstrated by the topical application to the test insect of a solution under test in butanone.

Mortality was assessed after 48 hours. The following compounds had $LD_{50}$ values of less than 200 ng/fly: compounds Nos. 4, 7 and 8.

b) Antifungal Testing

The antifungal activity of compounds of the invention was determined using a primary soft agar screen. The concentration dependent inhibition of hyphae growth was determined for the fungae listed below.

| | COMPOUND 4 | | COMPOUND 8 | |
|---|---|---|---|---|
| FUNGAE | $IC_{50}$ (ppm) | $IC_{90}$ (ppm) | $IC_{50}$ (ppm) | $IC_{90}$ (ppm) |
| Coniophora puteara | <20 | <30 | 0.32 | 3.0 |
| Coriolus Versicolor | <20 | <30 | 0.4 | 1.3 |
| Aureobasidium pullulans | <20 | <30 | 1.0 | 2.3 |
| Chaetomium globosum | <20 | <30 | 0.6 | 2.0 |
| Trichoderma viride | | | 0.45 | 1.7 |
| Aspergillus niger | | | 0.38 | 0.7 |
| Penicillium funiculosum | | | 5.4 | 22* |
| Poria placenta | | | 0.33 | 0.65 |

Formulations

1. Emulsifiable Concentrate

| | |
|---|---|
| Compound of formula (I) | 10.0 |
| Ethylan KEO | 20.0 |
| Xylene | 67.5 |
| Butylated Hydroxyanisole | 2.5 |
| | 100.0 |

2. Wettable Powder

| | |
|---|---|
| Compound of formula (I) | 25.0 |
| Attapulgite | 69.5 |
| Sodium isopropylbenzene sulphonate | 0.5 |
| Sodium salt of condensed naphthalene sulphonic acid | 2.5 |
| Butylated hydroxytoluene | 2.5 |
| | 100.0 |

3. Dust

| | |
|---|---|
| Compound of formula (I) | 0.5 |
| Butylated Hydroxyanisole | 0.1 |
| Talc | 99.4 |
| | 100.0 |

4. Bait

| | |
|---|---|
| Compound of formula (I) | 40.25 |
| Icing Sugar | 59.65 |
| Butylated hydroxy toluene | 0.10 |
| | 100.00 |

5. Lacquer

| | |
|---|---|
| Compound of formula (I) | 2.5 |
| Resin | 5.0 |
| Butylated Hydroxy anisole | 0.5 |
| Higharomatic white spirit | 92.0 |
| | 100.0 |

6. Aerosol

| | |
|---|---|
| Compound of formula (I) | 0.3 |
| Butylated Hydroxy anisole | 0.1 |
| 1,1,1-Trichloroethane | 4.0 |
| Odourless Kerosene | 15.6 |
| Arcton 11/12. 50:50 mix | 80.0 |
| | 100.0 |

7. Spray

| | |
|---|---|
| Compound of formula (I) | 0.1 |
| Butylated Hydroxy anisole | 0.1 |
| Xylene | 10.0 |
| Odourless Kerosene | 89.8 |
| | 100.00 |

8. Potentiated Spray

| | |
|---|---|
| Compound of formula (I) | 0.1 |
| Piperonyl Butoxide | 0.5 |
| Butylated Hydroxyanisole | 0.1 |
| Xylene | 10.1 |
| Odourless Kerosene | 89.2 |
| | 100.0 |

Example A

1-[4-[Dimethyl(prop-2-enyl)silylethynyl]phenyl]-4-n-propyl-2,6,7-trioxabicyclo[2.2.2]octane (Compound 1)

(i) To a stirred mixture of n-valeraldehyde (172g) and water (2 l) was added solid calcium hydroxide (112g) and formaldehyde solution (1.4 l of 40% aqueous solution). The reaction temperature was maintained below 40° and the addition took about 45 minutes. The mixture was then maintained at 60° for 5 hours. The reaction mixture was filtered through Kieselguhr and the filtrates were evaporated in vacuo. The residue was

treated with hot methanol (2 l) and the mixture was filtered through Kieselguhr. The filtrates were evaporated in vacuo. A viscous oily product was obtained (458g) and was purified as follows:-

A solution of the crude product and acetic acid (200 ml) was stirred at room temperature. Acetic anhydride (1.2 l) was added over 40 hours. The temperature rose to 65°. Stirring was continued for 12 hours. The reaction mixture was added over 3 hours to cold water (3 l) with stirring. Stirring was continued for 3 hours. The aqueous mixture was extracted with diethyl ether. The ether extracts were washed with aqueous sodium hydrogen carbonate solution and then with brine. The extracts were dried over anhydrous magnesium sulphate and then evaporated in vacuo.

Distillation gave 2,2-di-(hydroxymethyl)pentan-1-ol triacetate (238 g), a colourless oil (b.pt. 120-140°, 1.5mm).

Nuclear magnetic resonance spectrum (NMR) was as follows: $^1H$ (ppm from TMS in $CDCl_3$, integral, number of peaks):

4.00 6H, s; 2.10, 9H, s; 1.40, 4H, m; 1.00, 3H, m.

Sodium (0.5g) was added to a stirred solution of the above triacetate (238g) in methanol (2.5 l). The mixture was refluxed, with stirring, for 72 hours. The mixture was evaporated in vacuo.

2,2-Di-(hydroxymethyl)pentan-1-ol (87 g) was obtained as colourless crystals (m.pt. 93°).

ref. W.E. Conrad, L.A. Levasseur, R.F. Murphy, N.L. Hare and H.E. Conrad. J. ORG. CHEM 1962, 27, 2227

(ii) A mixture of 2,2-di-(hydroxymethyl)pentan-1-o1(24.6g), diethyl carbonate (20.1ml), potassium hydroxide (0.3g) and dry ethanol (2ml) was heated to gentle reflux (oil bath 110-120°) under a stream of nitrogen for 30 minutes. After this time the ethanol formed was removed by distillation at atmospheric pressure (oil bath 130 - 140°, still head temperature 76°). The pressure was reduced to 20 mm.Hg and the oil bath temperature adjusted to 230°. 3-Hydroxymethyl-3-n-propyloxetane distilled as a colourless liquid (16.7 g)(head temperature 120 - 126°).

Gas-liquid chromatography (g.l.c.): OV-210 at 120° produced one peak. Nuclear magnetic resonance spectrum (N.M.R.) was as follows: $^1H$ (ppm from TMS in $CDCl_3$, integral, multiplicity):

4.35, 4H, s; 3.60, 2H, m; 1.8 - 0.7, 7H, m.

(iii) A solution of 4-iodobenzoyl chloride (10.25g) in dry dichloromethane (50ml) was added to a stirred solution of 3-hydroxymethyl-3-n-propyloxetane (5.0g) and pyridine (3.0 ml) in dry dichloromethane (100 ml) at 0°. The resulting mixture was allowed to warm to room temperature and stirred for 24 hours. The mixture was then washed with water and brine. The organic extracts were dried over anhydrous magnesium sulphate and then evaporated in vacuo.

The residue was purified by column chromatography on silica (pre-eluted with 1% triethylamine in hexane) and eluted with 1:1 dichloromethane:hexane. 3-(4-Iodobenzoyloxymethyl)-3-n-propyloxetane (8.2g) was obtained as a colourless solid.

Nuclear magnetic resonance spectrum (N.M.R.) was as follows: $^1H$ (ppm from TMS in $CDCl_3$ integral, multiplicity): 7.80, 4H, s; 4.50, 6H, m; 1.80 - 1.20, 4H, m; 1.00, 3H, m.

Mass spectrum (chemical ionisation):-

M+1 361

(iv) Boron trifluoride etherate (0.34 ml) was added to a stirred solution of 3-(4-Iodobenzoyloxymethyl)-3-n-propyloxetane (4.0g) in dry dichloromethane (75 ml) at -70° under nitrogen. The resulting mixture was allowed to warm to room temperature and then stirred for 24 hours. After this time triethylamine (4.0 ml) was added. The reaction mixture was washed with water and the organic layer was dried over anhydrous potassium carbonate and then evaporated in vacuo. The residue was purified by chromatography on alumina, eluting with 1:4 hexane: dichloromethane saturated with ammonia. 1-(4-Iodophenyl)-4-n-propyl-2,6,7-trioxabicyclo[2,2,2]octane was obtained as a colourless solid (2.4g m.pt. 163°).

Nuclear magnetic resonance spectrum (N.M.R.) was as follows: $^1H$ (ppm from TMS in $CDCl_3$, integral, multiplicity, $JH_z$): 7.65, 2H, d, 7; 7.35, 2H, d, 7: 4.10, 6H, s; 1.30, 4H, m; 1.00,3H,m.

Mass spectrum (Chemical Ionisation)

M+1 361

(v) Bis-triphenylphosphine palladium dichloride (60 mg.) and cuprous iodide (20 mg.) were added to a stirred solution of 1-(4-Iodophenyl)-4-n-propyl-2,6,7-trioxabicyclo[2,2,2]octane (20g) and trimethylsilylacetylene (12 ml) in dry diethylamine (300 ml) under nitrogen. The resulting mixture was stirred at room temperature for 6 hours. After this time the solvent was removed under vacuum and the residue extracted with diethyl ether. The ethereal solution was washed with water, dried over anhydrous magnesium sulphate and evaporated in vacuo. The residue was purified by column chromatography on alumina, eluting with 1:3 dichloromethane: hexane saturated with ammonia. 4-n-Propyl-1-[4-(2-trimethylsilylethynyl)phenyl]-2,6,7-trioxabicyclo [2.2.2]octane (6.1g) was obtained as an off-white solid (m.pt 142°).

(vi) Tetrabutyl ammonium fluoride solution (49 ml, 1M in tetrahydrofuran) was added to a stirred solution of 4-n-propyl-1-[4-(2-trimethylsilylethynyl)phenyl]-2,6,7-trioxabicyclo[2.2.2]octane (13.5g) in tetrahydro furan (400 ml). The mixture was stirred for 3 hours at room temperature when the solvent was removed under vacuum. The residue was taken up in ether and washed with water and brine. The ethereal solution was dried over anhydrous magnesium sulphate and evaporated in vacuo. 1-(4-Ethynylphenyl)-4-n-propyl-2,6,7-trioxabicyclo[2.2.2] octane was obtained as an off-white solid (6.2 g, m.pt. 130°. recrystallisation from hexane).Mass Spectrum (Chemical Ionisation) M+1 259. NMR ($^1$H in $CDCl_3$)ppm from TMS, number of peaks: 7.50,4H,m; (4.10,6h,s; 3.05,1H,s; 1.40-0.80,.7H,m.

vii) n-Butyllithium (0.79 ml, 1.6M solution in hexane) was added to a stirred solution of the above compound (0.25 g) in dry tetrahydrofuran (15ml) at 0°, under nitrogen. The solution was stirred at 0° for 10 minutes and dimethylprop-2-enyl silyl chloride (0.2g) was added. After the solution had been stirred at room temperature for 6 hours the reaction mixture was evaporated in-vacuo. Water was added and the aqueous mixture was extracted with diethyl ether. The ethereal extracts were washed with water and dried over anhydrous magnesium sulphate. The solvent was removed in vacuo. The residue was purified by chromatography on alumina (Alumina Woelm TSC), eluting with 2:3 dichloromethane: hexane saturated with ammonia. 1-[4-(2-dimethylprop-2-enylsilylethynyl) phenyl]-4-n-propyl-2,6,7-trioxabicyclo[2.2.2] octane was obtained as pale yellow crystals (0.14g) (Compound 1). (m.p. 100.6°C)

Using methodology analogous to that outlined in stage (vii) above, the following were prepared:

1-[4-(2-diphenylmethylsilylethynyl)phenyl]-4-n-propyl-2,6,7-trioxabicyclo [2.2.2]octane (compound 2) (from chlordiphenylmethylsilane (Lancaster)).

1-[4-(2-benzyldimethylsilylethynyl)phenyl]-4-n-propyl-2,6,7-trioxabicyclo[2.2.2]octane (compound 3) (from benzyldimethylsilyl chloride (Lancaster).

1-[4-(2-acetoxyethyldimethylsilylethynyl)phenyl]-4-propyl-2,6,7-trioxabicyclo[2.2.2]octane. (Compound 9). From 2-acetoxyethyldimethylsilyl chloride (Petrarch).

1-(4-{2-[dimethyl(3-methylbutyl)silyl]ethynyl}phenyl)-4-propyl-2,6,7-trioxabicyclo[2.2.2]octane. Compound (10). From dimethyl(3-methylbutyl)silyl chloride.

1-{4-[2-(chloromethyldimethylsilyl)ethynyl]phenyl}-4-propyl-2,6,7-trioxabicyclo[2.2.2]octane. (Compound 11). From chloromethyldimethylsilyl chloride (Lancaster).

4-(dimethyl-{2-[4-(4-propyl-2,6,7-trioxabicyclo[2.2.2]oct-1-yl)phenyl]ethynyl}silyl)butyronitrile. (Compound 12). From 3-cyanopropyldimethylsilyl chloride (Lancaster).

Preparation of dimethyl-3-methylbutylsilyl chloride

The grignard reagent prepared from 3-methyl-1-bromobutane (Lancaster) (7.55g) and magnesium (1.2g) in tetrahydrofuran (100 ml) in the usual way was added at 0°C to a solution of dichlorodimethylsilane (Lancaster) (6.45g) in tetrahydrofuran (100 ml.). After stirring for 2 hours the reaction mixture was filtered to remove inorganic salts and evaporated under reduced pressure (water bath at less than 30°C).

Dimethyl-3-methylbutylsilyl chloride was obtained by distillation (b.p. 152-156°C at 760 mm Hg).

Nuclear Magnetic Resonance spectrum ($^1$H in $CDCl_3$) and expressed as ppm from TMS, number of peaks;

1.51, 1H, m; 1.29, 2H, m; 0.8-0.95, 8H, m; 0.41, 6H, s.

Example B

1-[4-(2-Iodoethynyl)phenyl]-4-n-propyl-2,6,7-trioxabicyclo[2.2.2]octane (Compound 4)

n-Butyllithium (4.90 ml of 1.6M solution in hexane) was added to a stirred solution of 1-(4-ethynylphenyl)-4-n-propyl-2,6,7-trioxabicyclo[2.2.2]octane (1.0 g) in dry diethyl ether (100 ml) at -70°, under a current of dry nitrogen. The reaction mixture was allowed to warm up to room temperature over a period of 30 minutes and then allowed to stand at room temperature for 1.5 hours. Solid iodine was added until a slight excess was achieved. The reaction mixture was stirred for 15 minutes at room temperature and sodium thiosulphate (10% aqueous solution) was added. The aqueous mixture was extracted with diethyl ether. The ethereal extracts were washed with water and dried over anhydrous magnesium sulphate. The solvent was removed in vacuo. 1-[4-(2-Iodoethynyl)phenyl]-4-n-propyl-2,6,7-trioxabicyclo[2.2.2] octane was obtained as a colourless solid (1.15 g.) (Compound 4).

Example C

4-n-Propyl-1-[4-4-trimethylsilylbuta-1,3-diynyl)phenyl]-2,6,7-trioxabicyclo[2.2.2]octane (Compound 5)

(i) n-Butyllithium (12.5 ml, 1.6M solution in hexane) was added to a stirred solution of trimethylsilylacetylene (2.0 g) in dry diethyl ether (150 ml) at -70°, under nitrogen. The solution was stirred at -70° for 30 minutes and bromine (1.03 ml) was added by syringe. The solution was stirred at -70° for 1 hour and then allowed to warm to 20°. Water was added and the aqueous mixture was extracted with diethyl ether. The ethereal extracts were washed with water and dried over anhydrous calcium chloride. The solvent was removed in vacuo. The residue was purified by chromatography on silica, eluting with 1:1 diethyl ether: hexane. 2-Bromo-trimethylsilylacetylene (3.1 g) was obtained as a colourless oil.

(ii) Using methodology outlined in Example A and starting from 2-bromo-1-trimethylsilylacetylene and 1-(4-ethynylphenyl)-4-n-propyl-2,6,7-trioxabicyclo [2.2.2]octane, 4-n-propyl-1-[4-(4-trimethylsilylbuta-1,3-diynyl)phenyl]-2,6,7-trioxabicyclo[2.2.2]octane was prepared.

Example D

1-[4-(Buta-1,3-diynyl)phenyl]-4-n-propyl-2,6,7-trioxabicyclo[2.2.2]octane (Compound 6)

Using methodology outlined in Stage (v) of Example A and starting from 4-n-propyl-1-[4-(4-trimethylsilylbuta-1,3-diynyl)phenyl]-2,6,7-trioxabicyclo[2.2.2]octane, 1-[4-(buta-1,3-diynyl)phenyl]-4-n-propyl-2,6,7-trioxabicyclo[2.2.2]octane was prepared.

Example E

1-[4-(5-Methoxypenta-1,3-diynyl)phenyl]-4-n-propyl-2,6,7-trioxabicyclo[2.2.2]octane (Compound 7)

(i) Bromine (4.4 ml) was added to a stirred aqueous solution of sodium hydroxide (25.7 g in 70 ml) at 0°. Methyl propargyl ether (6.0 ml) was added and the mixture was allowed to warm up to room temperature over a period of 1 hour. The mixture was stirred at 20° for 3 hours and then extracted with diethyl ether. The ethereal extracts were washed with water and dried over anhydrous calcium chloride. The solvent was removed in vacuo. 1-Bromo-3-methoxypropyne was obtained as a colourless oil and was used without further purification. Nuclear magnetic resonance spectrum (N.M.R.) was as follows:

$^1H$ (ppm from TMS in $CDCl_3$, integral, multiplicity:

4.10, 2H, s; 3.30, 3H, s.

Using methodology outlined in stage (v) of Example A and starting from a) 1-bromo-3-methoxypropyne from above and 1-(4-ethynylphenyl)-4-n-propyl-2,6,7-trioxabicyclo[2.2.2]octane, or b) methyl propargyl ether and 1-[4-(2-iodoethynyl)phenyl]-4-n-propyl-2,6,7-trioxabicyclo[2.2.2]octane from (i), 1-[4-(5-methoxypenta-1,3-diynyl)-phenyl]-4-n-propyl-2,6,7-trioxabicyclo[2.2.2]octane was prepared.

Example F

4-n-Propyl-1-[4-(2-tri-n-butylstannylethynyl)phenyl]-2,6,7-trioxabicyclo[2.2.2]octane Compound 8)

n-Butyllithium (1.3 ml of 1.6M solution, in hexane) was added to a stirred solution of 1-(4-ethynylphenyl)-4-n-propyl-2,6,7-trioxabicyclo[2.2.2]octane (0.5 g) in dry tetrahydrofuran (15 ml), at 0°. The mixture was stirred at 0° for 10 minutes and tri-n-butyltin chloride (0.82 ml) was added. The mixture was stirred at 0° for 3 hours and then evaporated in vacuo. The residue solidified on standing. The residue was purified by chromatography on alumina (Alumina Woelm TSC), eluting with 1:4 dichloromethane:hexane, saturated with ammonia. 4-n-Propyl-1-[4-(2-tri-n-butylstannylethynyl)phenyl]-2,6,7-trioxabicyclo[2.2.2] octane was obtained as a yellow solid (0.15 g mpt 61°).

## Claims

1. A compound of the formula (I)

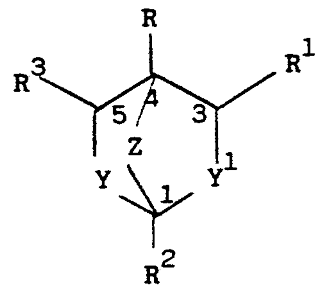

(I)

wherein R is $C_{2-10}$ alkyl, alkenyl or alkynyl, each optionally substituted by, or methyl substituted by, cyano, halo, $C_{3-4}$ cycloalkyl, $C_{1-4}$ alkoxy, or a group $S(O)_mR^4$ where $R^4$ is $C_{1-4}$ alkyl and m is 0, 1 or 2, or R is $C_{3-10}$ cycloalkyl, $C_{4-10}$ cycloalkenyl or phenyl, each optionally substituted by $C_{1-4}$ alkoxy, $C_{1-3}$ alkyl, $C_{2-4}$ alkynyl, halo, cyano or a group $S(O)_mR^4$ as defined hereinbefore;

$R^1$ and $R^3$, may be the same or different, and each is hydrogen, $C_{1-3}$ alkyl, $C_{2-3}$ alkenyl or ethynyl optionally substituted by tri-$C_{1-4}$ alkylsilyl, the alkyl or alkenyl each being optionally substituted by halo or $C_{1-4}$ alkoxy; alkyl carbalkoxy containing up to 6 carbon atoms, a group $S(O)_mR^4$ as defined hereinbefore; or $R^1$ is COO-$C_{1-4}$-alkyl, cyano or gem dimethyl when $R^3$ is hydrogen, or $R^1$ and R and the carbon atoms to which they are attached form a $C_{5-7}$ carbocyclic ring optionally substituted by halo, $C_{1-3}$ alkyl or alkoxy or $C_{2-3}$ alkenyl;

$R^2$ is a phenyl group substituted at the 4-position by a group $-(C{\equiv}C)_nR^5$ and optionally substituted at other positions of the phenyl ring, wherein n is 1 or 2 and $R^5$ is iodo, hydrogen, or a $C_{1-5}$ alkyl group optionally substituted by halo, hydroxy, $C_{1-4}$ alkoxy or $C_{2-4}$ acyloxy or $R^5$ is $C_{2-4}$ carbalkoxy, a group $Sn(R^6)_3$ wherein the groups $R^6$ are the same or different and each is a $C_{1-6}$ alkyl group or $R^5$ is a group $Si(R^7)_3$ wherein the groups $R^7$ are the same or different and each is a hydrocarbyl group containing up to 8 carbon atoms optionally substituted by one to three halo, $C_{1-6}$ alkoxy, $C_{1-6}$ alkylthio, cyano, acyloxy or carbalkoxy groups or, when one or more of the groups $R^7$ is alkynyl, this is optionally substituted by silyl substituted by three $C_{1-4}$ alkyl groups; Y and $Y^1$ are the same or different and are each selected from oxygen and $S(O)_{m'}$ where m' is 0, 1 or 2; Z is $CH_2CH_2$, $CH_2O$, $CH_2S$, or Z is $-CO.CH_2$-or $-CH(OR^8)CH_2$-wherein $R^8$ is hydrogen, $C_{1-4}$ alkyl, $C_{1-4}$ acyl or $C_{1-3}$ carbamoyl; provided that when $R^5$ is hydrogen, or a $C_{1-5}$ alkyl group optionally substituted by halo, hydroxy, $C_{1-4}$ alkoxy or $C_{2-4}$ acyloxy or $R^5$ is $C_{2-4}$ carbalkoxy or a silyl group substituted by three $C_{1-4}$ alkyl groups or two $C_{1-4}$ alkyl groups and a phenyl group, n is 2.

2. A compound according to claim 1 wherein $R^2$ is a phenyl group substituted at the 4-position by a group $-(C{\equiv}C)_nR^5$ and optionally substituted at other positions of the phenyl ring, wherein n is 1 or 2 and $R^5$ is a group $Sn(R^6)_3$ wherein the groups $R^6$ are the same or different and are each $C_{1-6}$ alkyl groups; or n is 2 and $R^5$ is hydrogen, or a $C_{1-5}$ alkyl group optionally substituted by halo, hydroxy, $C_{1-4}$ alkoxy or $C_{2-4}$ acyloxy or $R^5$ is $C_{2-4}$ carbalkoxy or a silyl group substituted by three $C_{1-4}$ alkyl groups or two $C_{1-4}$ alkyl groups and a phenyl group.

3. A compound according to claim 1 wherein $R^2$ is a phenyl group substituted at the 4-position by a group $-(C{\equiv}C)_nR^5$ and optionally substituted at other positions of the phenyl ring, wherein n is 1 or 2 and $R^5$ is iodo, or a group $Si(R^7)_3$ wherein the groups $R^7$ are the same or different and each is a hydrocarbyl group containing up to 8 carbon atoms optionally substituted by one to three halo, $C_{1-6}$ alkoxy, $C_{1-6}$ alkylthio, cyano, acyloxy or carbalkoxy groups or, when one or more of the groups $R^7$ is alkynyl, this is optionally substituted by silyl substituted by three $C_{1-4}$ alkyl groups, provided that $R^5$ is not a silyl group substituted by three $C_{1-4}$ alkyl groups or two $C_{1-4}$ alkyl groups and a phenyl group when n is 1.

4. A compound according to any one of the preceding claims wherein R is propyl, butyl, pentyl, $C_{2-5}$ alkenyl or alkynyl, $C_{3-7}$ cycloalkyl or phenyl each optionally substituted by fluoro, chloro or bromo.

5. A compound according to claim 4 wherein R is n-propyl, n-butyl, i-butyl, t-butyl or cyclohexyl.

6. A compound according to any one of the preceding claims wherein $R^1$ is hydrogen, cyano, methyl or ethyl each optionally substituted by cyano, methoxy, methylthio, chloro, bromo or fluoro.

7. A compound according to claim 6 wherein $R^1$ is hydrogen, methyl, cyano or trifluoromethyl.

8. A compound according to any one of the preceding claims wherein the phenyl group $R^2$ is also substituted by one or more halo, cyano, or nitro groups or by one or more $C_{1-3}$ alkyl or $C_{1-3}$ alkoxy groups each optionally substituted by halo.

9. A compound according to claim 8 wherein the further substituents are at the 3 and/or 5 position with the proviso that a fluoro or chloro substituent may also be present at the 2 and/or 6 position.

10. A compound according to any one of the preceding claims wherein $R^3$ is hydrogen.

11. A compound according to any one of the preceding claims wherein n is 2 and $R^5$ is hydrogen, trimethylsilyl or substituted methyl or substituted ethyl, the substituents being hydroxy or methoxy.

12. A compound according to any one of claims 1 - 10 wherein n is 1 or 2 and $R^5$ is iodo or tributyl tin or $Si(R^7)_3$ where at least two $R^7$ groups are methyl and the third $R^7$ group is methyl, ethyl, propyl, butyl, cyclohexyl, cyclohexenyl, vinyl, allyl, phenyl, benzyl or a group $(CH_2)_pR^9$ wherein p is 1 to 3 and $R^9$ is halo, cyano, acetoxy, $C_{1-5}$ alkoxy, phenoxy, trimethylsilyloxy or a group $S(O)m'' R^{10}$ wherein m'' is 0, 1 or 2 and $R^{10}$ is $C_{1-4}$ alkyl or phenyl.

13. A compound according to any one of the preceding claims wherein Z is $-CH_2S-$ or $-CH_2O-$ and Y and $Y^1$ are both 0.

14. A compound according to claim 1 which is 1-[4-(2-iodoethynyl)phenyl]-4-n-propyl-2,6,7-trioxabicyclo[2.2.2]octane;
1-[4-[dimethyl(prop-2-enyl)silylethynyl]phenyl]-4-n-propyl-2,6,7-trioxabicyclo[2.2.2]octane;
1-[4-(2-benzyldimethylsilylethynyl)phenyl]-4-n-propyl-2,6,7-trioxabicyclo[2.2.2]octane;
1-[4-(buta-1,3-diynyl)phenyl]-4-n-propyl-2,6,7-trioxabicyclo[2.2.2]octane;
4-n-propyl-1-[4-(4-trimethylsilylbuta-1,3-diynyl)phenyl]-2,6,7-trioxabicyclo[2.2.2]octane;
1-[4-(5-methoxypenta-1,3-diynyl)phenyl]-4-n-propyl-2,6,7-trioxabicyclo[2.2.2]octane;
4-n-propyl-1-[4-(2-tri-n-butylstannylethynyl)phenyl]-2,6,7-trioxabicyclo[2.2.2]octane;
1-[4-(2-benzyldimethylsilylethynyl)phenyl]-4-n-propyl-2,6,7-trioxabicyclo[2.2.2]octane;
1-[4-(2-acetoxyethyldimethylsilylethynyl)phenyl]-4-n-propyl-2,6,7-trioxabicyclo[2.2.2]octane;
1-(4-{2-[dimethyl(3-methylbutyl)silyl]ethynyl}phenyl)-4-propyl-2,6,7-trioxabicyclo[2.2.2]octane;
1-{4-[2-(chloromethyldimethylsilyl)ethynyl]phenyl}-4-propyl-2,6,7-trioxabicyclo[2.2.2]octane; or
4-(dimethyl-{2-[4-(4-propyl-2,6,7-trioxabicyclo[2.2.2]oct-1-yl)phenyl]ethynyl}silyl)butyronitrile.

15. A process for the preparation of a compound of formula I as defined in claim 1 where $R^5$ is iodo which comprises iodination a compound of the formula (IA)

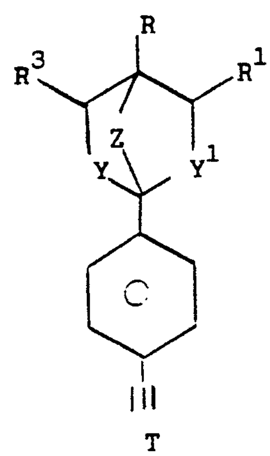

(1A)

wherein T is hydrogen or C≡CH and where R, $R^1$, $R^3$, Y, $Y^1$ and Z are as defined in claim 1.

16. A process for the preparation of a compound of formula I as defined in claim 1 wherein $R^5$ is $Sn(R^6)_3$ or $Si(R^7)_3$ which comprises reacting a compound of formula IA as defined in claim 15 with a compound hal-$Sn(R^6)_3$ or hal-$Si(R^7)_3$ where hal is halogen and $R^6$ and $R^7$ are as defined in claim 1.

17. A process for the preparation of a compound of formula I as defined in claim 1 where n is 2 which comprises reacting a compound of formula $T^1C{\equiv}CR^{11}$ with a compound of formula IA as defined in claim 15 except that T is hydrogen or halogen and where $T^1$ is halogen then T is hydrogen and where $T^1$ is hydrogen then T is halogen and where $R^{11}$ is a group $R^5$ inert under the reaction conditions.

18. A process for the preparation of a compound of formula I as defined in claim 1 where n is 2 and $R^5$ is hydrogen by desilylation of a compound of formula I where $R^5$ is a tri-$C_{1-4}$ alkylsilyl group.

19. A pesticidal or anti-fungal composition comprising a compound according to any one of claims 1 - 14 together with an inert carrier or diluent.

20. A composition according to claim 19 additionally comprising a synergist or potentiator for the formula I compound.

21. A composition according to claim 19 or 20 additionally comprising a further pesticidal compound or pest attractant.

22. A method of controlling pests or fungi comprising application to the pest or fungi or to an environment susceptible to pest or fungal infestation of a compound according to any one of claims 1 - 14 or a composition according to any one of claims 19 - 21.

23. A compound according to any one of claims 1 - 14 or a composition according to any one of claims 19 - 21 for use. in a method for the treatment of the human or animal body by therapy.